# EUROPEAN PATENT SPECIFICATION

(11) **EP 1 021 670 B1**
(45) Date of publication and mention of the grant of the patent: **28.11.2007**
(21) Application number: 98952088.7
(22) Date of filing: 06.10.1998
(51) Int. Cl.: F16K 11/074

(54) **MULTI-WAY STOP OR DIVERTER VALVE**
MEHRWEG VENTIL
ROBINET INVERSEUR OU D'ARRET A PLUSIEURS VOIES

(30) Priority: 06.10.1997 IT TO970885
(43) Date of publication of application: 26.07.2000
(73) Proprietor: MASCO CORPORATION, Taylor, MI 48180 (US)
(72) Inventor: KNAPP, Francesco, I-27061 Cava Manara (IT)
(74) Representative: Oppermann, Mark
(86) International application number: PCT/US1998/020974
(87) International publication number: WO 1999/018378

(56) References cited:
- DE-A- 2 246 763
- US-A- 2 377 473
- US-A- 2 578 160
- US-A- 2 593 733
- US-A- 2 840 109
- US-A- 2 888 098
- US-A- 2 924 207
- US-A- 2 979 963
- US-A- 3 633 621
- US-A- 3 837 360
- US-A- 4 253 494
- US-A- 4 294 285
- US-A- 4 410 001
- US-A- 4 632 148

## Description

### TECHNICAL FIELD

This invention relates to a multi-way shut-off or diverter valve, comprising a fixed body that has an inlet connection and at least one outlet connection one or the other of which is connected to the inlet connection.

Valves of this type are known from the documents US 4632148, US 4253494, US 2377473 and US 2979963.

### BACKGROUND OF THE INVENTION

Shut-off and diverter valves are commonly inserted between a flow control device, for example, a mixing faucet or a thermostatic valve, and two or more units that can be supplied under the control of the device. For example, a device of this kind can make it possible to supply, as desired, the tap of a bathtub, a handheld shower head, a shower with a fixed head, and possibly some other hydraulic delivery unit. Often these types of valves have a driven mobile valve element rotatable about an axis to bring about the desired fluid connection between the inlet connection and a selected one of the outlet connections.

A diverter valve of this kind can easily be made by using small plates made from hard material, such as ceramics or structural plastics. However, many common designs demand that these thin plates assume a relatively considerable diameter. The enlarged diameter of the valve in addition to being expensive contribute to excessive wear and tear that often interferes with the operation of the valve.

What is needed is a valve of the type indicated which will not have any great degree of wear or tear and which will therefore be easily operated. What is also needed is to have a diverter valve that can be easily manufactured on an industrial scale and be relatively economical.

### SUMMARY OF THE INVENTION

In accordance with the invention, a valve device is operably interposable between a flow control device and at least one fluid delivery unit that can be supplied under the control of the valve device. The valve device includes a fixed body with an inner facing surface and a rotatable valve member. The fixed body has a respective facing surface that has an inlet connection and at least one outlet connection radially spaced from said inlet connection. Preferably, the fixed body has at least two outlets at its inner facing surface both being equally spaced from the inlet in the fixed body.

The rotatable valve member has a respective facing surface that is rotatable about a common axis with the inlet connection. The rotatable valve member is movable to selectively open and close fluid connection between the inlet connection of the fixed body and one of the outlet connections of said fixed body member.

Either the fixed body or rotatable valve member houses a first sealing member sealingly biased against the facing surface of the other of the fixed body or rotatable valve member. Preferably, the first sealing member is seated in the fixed body and sealingly biased against the facing surface of the rotatable member about the inlet opening.

The rotatable member has an internal conveyance duct that has an inlet opening on its surface co-aligned with the inlet connection in the fixed body and the axis of rotation. The internal conveyance duct has an outlet radially spaced the same distance from the inlet of the rotatable member as the at least one outlet in the fixed member is spaced from its respective inlet connection.

A respective second sealing member is seated either in one of the outlets in said fixed body or the outlet in the rotatable member and is biased against a surface of the other of said rotatable member and fixed body. Preferably the respective sealing member is positioned at the outlet end of the conveyance duct and biased to abut the inner facing surface of the fixed body. The sealing members are made from elastomeric material and are biased by a respective spring. In another embodiment, the respective sealing members are collars made from rigid material pushed by springs and provided with a retaining packing.

The respective second sealing member in either the rotatable valve member or fixed body can be completely misaligned from any of the outlets in the other of the rotatable members or fixed body and sealingly closes the duct from the outlet in said fixed body to form a stop valve.

In one embodiment, the rotatable valve member is assembled to a second rotatable member. The conveyance duct is determined by the configuration in the nature of a cavity presented by the respective facing surfaces of the juxtaposed rotatable valve member and second rotatable member. Preferably, either the rotatable valve member or second rotatable member is linked to a driving device and a torque transmitter is provided between the second rotatable member and rotatable valve member.

It maybe desirable to include a resiliently biased detent release member to be positioned between the fixed body and the rotatable valve member and engaging a notch or debossment to provide an indication of the correct operating position of the valve where one respective sealing member is exactly aligned about the other of the outlets in the rotatable member and one outlet in the fixed body.

It is also desirable to include a stop limiter interconnected between the fixed body and rotatable valve member for limiting the rotational movement that the rotatable member may have with respect to the fixed body.

### BRIEF DESCRIPTION OF THE DRAWING

Reference now is made to the accompanying drawings in which:
Figure 1 is a schematic segmented view that illustrates the essential parts of a valve according to the invention;
Figure 2 is a plan view looking down on the fixed body of the valve;
Figure 3 is a plan view of the rotatable assembly at surface 22;
Figure 4 is a diametrical profile illustrating an embodiment of the valve according to the invention;
Figure 5 is an enlarged fragmentary view of an alternate embodiment of disc member 21; and
Figure 6 is a plan view of the disc member 21 shown in Figure 5.

### DETAILED DESCRIPTION OF THE PREFERRED EMBODIMENT

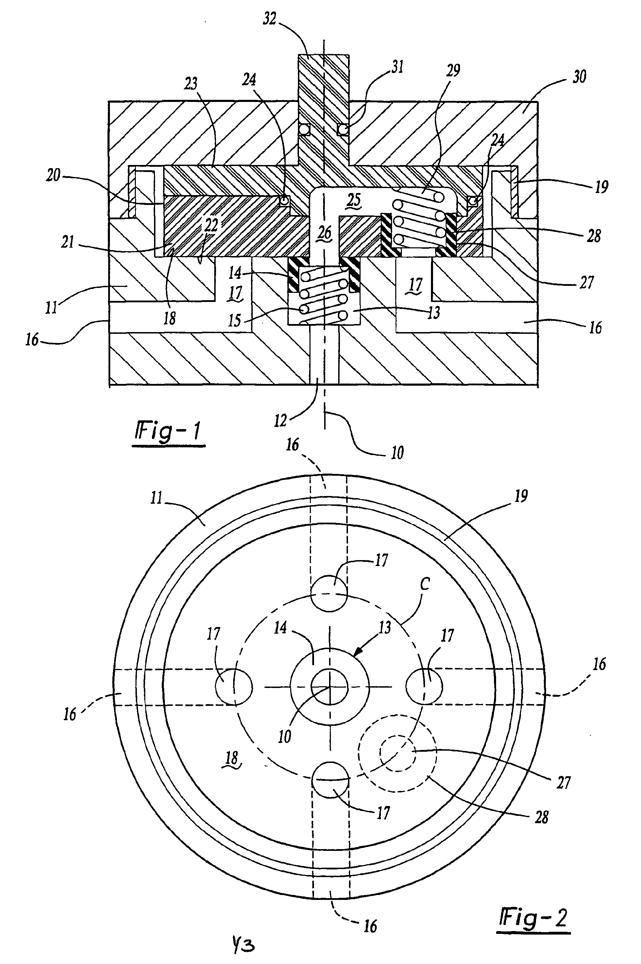

The basic principle behind the invention will be described with reference to Figures 1-3, which schematically illustrate only the essential parts of the valve.

The valve comprises a fixed body 11 which, under operating conditions, is sealingly enclosed by a cap 30. The fixed body 10 has an inlet connection 12 to which is linked an inlet duct 13 that extends along an axis 10. In inlet duct 13, there is housed a first sealing element which, in the form shown, is commercially available by annular elastomeric ring 14 seated above and biased by a coil spring 15. Furthermore, fixed body 11 has a plurality of outlet connections 16, each of which is linked to an outlet duct 17.

Inlet connection 12 is intended to be connected to the outlet of a flow control device (not shown) which, for example, can be a mixing faucet or a thermostatic valve, and each of the outlet connections 16 is intended to be connected to a hydraulic unit (not shown), which one wishes to be able to supply through the above-mentioned flow control device. These hydraulic units, for example, can be the tap spouts, showerheads, hand held showers or the like.

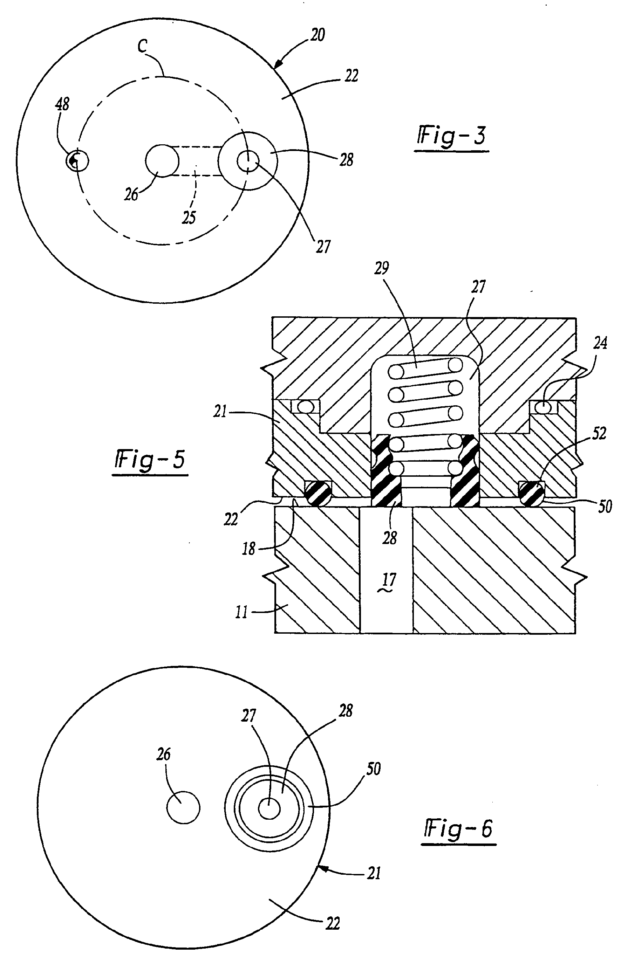

Inlet duct 13 and outlet duct 17 empty upon an internal surface 18 of fixed body 11 which, in this example, is planar in shape but which can have a different contour. Any selected contour must display circular symmetry with respect to axis 10. All outlet ducts 7 empty upon internal surface 18 at a distance or a circumference C having its center on axis 10, as clearly illustrated in Figure 2. Fixed body 11 also has a fastening device such as thread 19 for engaging cap 30.

A rotatable assembly 20 has a first part that includes a disc 21 with a surface 22 that faces internal surface 18 of fixed body 11. The surfaces 18 and 22 are arranged in loose sliding contact with each other or in close spaced proximity to each other. The rotatable assembly 20 is completed by a second part 23 mounted to the rotatable disc 21 and retained by a packing 24. The two parts 21 and 23 of the rotatable assembly 20 are constructed and shaped such that when assembled together, a conveyance duct 25, is defined inside the assembly 20. The duct 25 has a first inlet 26 that empties upon surface 22 along axis 10 and, therefore, aligns with the inlet duct 13 of fixed body 11 and an outlet 27 which is positioned a distance that corresponds to the circumference C as shown in Figure 3 and thus selectively alignable with outlet duct 17. In this outlet part 27, there is housed a second annular elastomeric sealing element 28 that is also resiliently biased against surface 18 of fixed body 11 by a spring 29. Similarly the sealing element collar 14 is biased and retained against surface 22 of the rotatable member 21 about inlet 26 by spring 15.

Rotatable member 20 is mounted rotatably in fixed body 11 so as to be able to rotate around axis 10. It is integrally formed with a control stem 32 that extends out of cap 30 and aligned with axis 10. A packing 31 prevents leakage. Control stem 32 can be attached to a knob, lever or other handle (not shown).

The described valve works in the following manner. Rotatable member 20 is pivoted from any torque forces transferred from control stem 32 so that outlet 27 of conveyance duct 25 becomes aligned with one of the pre-selected ducts 17 of fixed body 11. The following open hydraulic circuit is established between connection 12, inlet duct 13, inlet part 26, conveyance duct 25, outlet part 26, outlet duct 17, and outlet connection 16. Therefore, an outlet of a flow control device that is connected an inlet connection 12 is enabled to supply a hydraulic unit connected to the pre-selected outlet duct 16, while all the other hydraulic units connected to the other outlet connections 16 are not supplied and sealed from any water leakage. The valve thus makes it possible to direct the water supply coming from a flow control device to a selected hydraulic unit of an assembly, dependent on the rotated position of rotatable member 20.

Furthermore, the rotatable member can possibly also be pivoted into a shut-off or closed position in which outlet 27 of the conveyance duct corresponds to a point on surface 18 of fixed body 11 where no outlet duct 17 is present and thus sealing outlet 27 via sealing element 28 against surface 18. In this case, the valve intercepts the supply of water. One shut-off position of outlet 27 and sealing element 28 is shown in phantom in Figure 2.

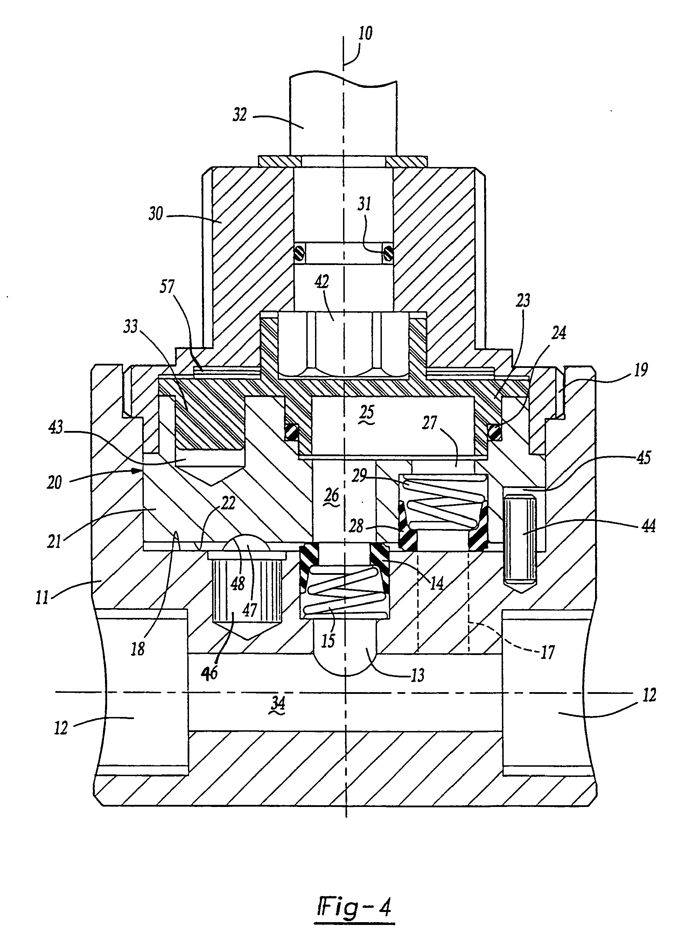

A possible practical embodiment of the valve is shown in a cross-sectional segmented view in Figure 4. The parts that correspond to those in Figure 1-3 have the same reference numbers and will not be further described. In this case, body 11 has two inlet connections 12 which are connected to each other by a passage 34 and are connected to inlet duct 13 in which is located a sealing element 14 and spring 15. This arrangement makes it possible to use one or the other of connections 12 which is in the most favorable position for installation, while closing off the opposite. Alternatively, the opposite inlet 12 can connect to a pipeline intended to be supplied independently of the position of the diverter valve. Furthermore, fixed body 11 has a plurality of outlet connections 16, which are not visible, because they are not in the profile plane, and a plurality of corresponding outlet ducts 17, which are likewise not visible but shown in phantom as if it is to be shown on the profile plane. In this figure 4, the valve is shown in the shut-off position.

The second part 23 of the rotatable assembly 20 is not made in one piece with the control stem 32 but is coupled to the control stem by means of a prismatic coupling 42. Furthermore, to transmit in the best possible fashion to the first part 21 the rotating movements received from control stem 32, part 13 has a projection 33 that engages a corresponding shaped cavity 43 in part 21.

In many cases it is not suitable for the rotatable member 20 to perform an unlimited rotation, so stop limits are built into the valve device. A peg 44 is inserted in fixed body 11. The peg 44 engages a notch 45 that extends along the periphery of member 21 and whose extension determines the range of rotation of rotatable assembly 20.

Also provided is a detent device 46 (illustrated by way of an external view), comprising on the inside, for example, a sphere 47 that is biased upward by a spring (not shown) cooperating with at least one hemispherical notch 48 in the surface 22 of the rotatable member to define positions determined by it. These positions are selected such that each of them results in selected alignment of outlet duct 27 with one of the ducts 17 to supply water to one of the hydraulic units connected to the valve. At least one shut-off position can also be defined in this fashion.

Washer 57, made of anti-friction material, can be inserted between part 23 of the rotatable member and cap 30 to decrease rotatable frictional forces. One can also use various materials to make the valve function practically. Generally, body 11, cap 30 and control stem 32 are metallic. Parts 21 and 23 of the rotatable member 20 are plastic material. In any case, one may avoid the use of expensive materials such as ceramics or other hard metals with the valve according to the invention.

The device according to Figure 4 works in the same way as explained with reference to Figures 1-3 with the addition of the functions intended to limit mobility due to peg 14 and the definition of the operating positions due to detent member 46.

There may be situations where it is desired to have fuller sealing of the separate outlets 17 from duct outlet 27 even during operation of rotatable member 20. In such a situation it is desired to add a sealing ring 50 about sealing element 28 to prevent any cross-flow as sealing element 28 crosses over any outlet 17 as shown in Figures. Such a sealing ring 50 is merely seated in a complementary groove 52 in surface 22 as shown in figures 5 and 6.

It is understood that the invention is not confined to the embodiments described and illustrated as examples. Such modifications are well within the grasp of the expert in the field. For example, the inlet connections can vary in number and be arranged in various ways. The number of outlet connections depends on the intended use and can also vary. The sealing devices, each described as consisting of a collar made up of elastomeric material provided with a spring, could have a different structure. In particular, they could be made up of collars that are pushed by their own elasticity or by rigid collars pushed by springs and provided with retaining packing. Stem member 20 could have a shape different from a shaft, for example, it could be a lever or a key.

These and other modifications and any substitution with technical equivalents can be introduced without departing from the scope of the invention as defined by the appended claims.

## Claims

1. A valve device which is operably interposable between a flow control device and at least one fluid delivery unit that can be supplied under the control of said valve device, said valve device comprising:
a fixed body (11) with an inner facing surface (18) that has an inlet (13) and at least one outlet (17) radially spaced from said inlet (13);
a rotatable valve member (20) having a respective facing surface (22) that is rotatable about a common axis (10) with the inlet (13) to selectively open and close fluid connection between said inlet (13) and one of the at least one outlet (17) of the fixed body (11);
one of the fixed body (11) and rotatable valve member (20) houses a first sealing member (14) sealingly biased against said facing surface (22) of the other of said fixed body (11) and rotatable valve member (20), said facing surface (22) being substantially planar and extending laterally beyond the first sealing member (14), said rotatable valve member (20) having an internal conveyance duct (25) that has an inlet (26) on its surface co-aligned with the inlet (13) in said fixed body (11) and said axis of rotation (10) and that has an outlet (27) radially spaced the same distance from said inlet (26) of said rotatable valve member (20) as said at least one outlet (17) in said fixed body (11) is spaced from said respective inlet (13);
one of said at least one outlet (17) in said fixed body (11) and said outlet (27) in said rotatable valve member (20) contains a respective second sealing member (28), said second sealing member (28) being made from an elastomeric material and biased by a spring (29) against a surface (18) of the other of said rotatable valve member (20) and fixed body (11) so that, when said second sealing member (28) in one of the fixed body (11) and rotatable valve member (20) is completely misaligned from any of the outlets (17) in the other of the fixed body (11) and rotatable valve member (20), said second sealing member (28) sealingly closes said internal conveyance duct (25) from said outlet (17) in said fixed body (11) to form a stop valve; **characterised in that**,
an outer O-ring seal (50) is seated in a complementary groove (52) in said facing surface (22) about said second sealing member (28) and spaced from said second sealing member (28) a sufficient distance to prevent any cross-flow as said second sealing member (28) crosses over any outlet (17).

2. A valve device according to claim 1, wherein said fixed body (11) has at least two outlets (17) at its inner facing surface (18), both being equally spaced from said inlet (13) in said fixed body (11); and wherein said respective second sealing member (28) is positioned at the outlet (27) of said internal conveyance duct (25) and biased by said spring (29) to abut the inner facing surface (18) of said fixed body (11).

3. A valve device according to claim 1 or 2, wherein said first sealing member (14) is seated in said fixed body (11) and is sealingly biased against said facing surface (22) of said rotatable valve member (20) about said inlet (26).

4. A valve device according to claim 2 or 3, wherein said first sealing member (14) is made from an elastomeric material and biased by a spring (15).

5. A valve device according to claim 2 or 3, wherein said first sealing member is made from an elastomeric material and biased by its own resilient elasticity.

6. A valve device according to claim 1, wherein said first sealing member is a collar made from a rigid material pushed by a spring and provided with a retaining packing.

7. A valve device according to claim 1, wherein said rotatable valve member (20) comprises a first part (21) and a second part (23), and wherein said internal conveyance duct (25) is determined by a cavity formed by the respective facing surfaces of the juxtaposed first part (21) and second part (23) of the rotatable valve member (20).

8. A valve device according to claim 7, wherein one of the first part (21) and the second part (23) of the rotatable valve member (20) is linked to a driving device (32), and wherein a torque transmitter (33, 43) is provided between the first part (21) and the second part (23) of the rotatable valve member (20).

9. A valve device according to claim 1, wherein a resiliently biased detent release member (47), cooperating with notches (48), is arranged between the fixed body (11) and the rotatable valve member (20) to provide an indication of the correct operation position of the valve device, where one respective second sealing member (28) is exactly aligned about the outlet (27) in said rotatable valve member (20) and one outlet (17) in said fixed body (11).

10. A valve device according to claim 1, wherein a stop limiter (44, 45) is interposed between the fixed body (11) and rotatable valve member (20) for limiting the rotational movement that the rotatable valve member (20) may have with respect to the fixed body (11).

## Patentansprüche

1. Ventilvorrichtung, die betriebsfähig zwischen eine Flußsteuereinrichtung und mindestens eine Flüssigkeitsabgabeeinheit, welche unter Steuerung durch die Ventilvorrichtung versorgt werden kann, zwischenschaltbar ist, wobei die Ventilvorrichtung umfaßt:
einen ortsfesten Körper (11) mit einer inneren Stirnfläche (18), die einen Einlaß (13) und mindestens einen Auslaß (17) aufweist, der radial von dem Einlaß (13) beabstandet ist;
ein drehbares Ventilteil (20) mit einer entsprechenden Stirnfläche (22), das um eine mit dem Einlaß (13) gemeinsame Achse (10) drehbar ist, um eine Flüssigkeitsverbindung zwischen dem Einlaß (13) und einem von dem mindestens einen Auslaß (17) des ortsfesten Körpers (11) wahlweise zu öffnen und zu schließen;
wobei eines von dem ortsfesten Körper (11) und dem drehbaren Ventilteil (20) ein erstes Dichtungsteil (14) aufnimmt, das dichtend gegen die Stirnfläche (22) des anderen von dem ortsfesten Körper (11) und dem drehbaren Ventilteil (20) vorgespannt ist, wobei die Stirnfläche (22) im wesentlichen eben ist und sich seitlich über das erste Dichtungsteil (14) hinaus erstreckt, wobei das drehbare Ventilteil (20) einen inneren Förderkanal (25) aufweist, der auf dessen Fläche einen mit dem Einlaß (13) in dem ortsfesten Körper (11) und der Drehachse (10) ausgefluchteten Einlaß (26) hat und der einen Auslaß (27) aufweist, welcher mit demselben Abstand von dem Einlaß (26) des drehbaren Ventilteils (20) radial beabstandet ist wie der mindestens eine Auslaß (17) in dem ortsfesten Körper (11) von dem entsprechenden Einlaß (13) beabstandet ist;
wobei einer von dem mindestens einen Auslaß (17) in dem ortsfesten Körper (11) und dem Auslaß (27) in dem drehbaren Ventilteil (20) ein entsprechendes zweites Dichtungsteil (28) enthält, wobei das zweite Dichtungsteil (28) aus einem elastomeren Material hergestellt ist und von einer Feder (29) gegen eine Fläche (18) des anderen von dem drehbaren Ventilteil (20) und dem ortsfesten Körper (11) vorgespannt ist, so daß, wenn das zweite Dichtungsteil (28) in einem von dem ortsfesten Körper (11) und dem drehbaren Ventilteil (20) gegenüber jedem der Auslässe (17) in dem anderen von dem ortsfesten Körper (11) und dem drehbaren Ventilteil (20) vollständig unausgefluchtet ist, das zweite Dichtungsteil (28) den inneren Förderkanal (25) dichtend von dem Auslaß (17) in dem ortsfesten Körper (11) abtrennt, um ein Absperrventil zu bilden;
**dadurch gekennzeichnet, daß** eine äußere O-Ring-Dichtung (50) in einer komplementären Nut (52) in der Stirnfläche (22) um das zweite Dichtungsteil (28) herum sitzt und einen ausreichend großen Abstand von dem zweiten Dichtungsteil (28) aufweist, um jeden Querfluß zu verhindern, wenn das zweite Dichtungsteil (28) über irgendeinen Auslaß (17) bewegt wird.

2. Ventilvorrichtung nach Anspruch 1, wobei der ortsfeste Körper (11) mindestens zwei Auslässe (17) an seiner inneren Stirnfläche (18) aufweist, die beide von dem Einlaß (13) in dem ortsfesten Körper (11) gleich beabstandet sind; und wobei das entsprechende zweite Dichtungsteil (28) am Auslaß (27) des inneren Förderkanals (25) angeordnet und durch die Feder (29) vorgespannt ist, um an der inneren Stirnfläche (18) des ortsfesten Körpers (11) anzuliegen.

3. Ventilvorrichtung nach Anspruch 1 oder 2, wobei das erste Dichtungsteil (14) in dem ortsfesten Körper (11) sitzt und dichtend gegen die Stirnfläche (22) des drehbaren Ventilteils (20) um den Einlaß (26) herum vorgespannt ist.

4. Ventilvorrichtung nach Anspruch 2 oder 3, wobei das erste Dichtungsteil (14) aus einem elastomeren Material hergestellt und durch eine Feder (15) vorgespannt ist.

5. Ventilvorrichtung nach Anspruch 2 oder 3, wobei das erste Dichtungsteil aus einem elastomeren Material hergestellt und durch seine eigene Federelastizität vorgespannt ist.

6. Ventilvorrichtung nach Anspruch 1, wobei das erste Dichtungsteil eine Manschette ist, die aus einem starren Material hergestellt, durch eine Feder gedrückt und mit einer Haltepackung versehen ist.

7. Ventilvorrichtung nach Anspruch 1, wobei das drehbare Ventilteil (20) ein erstes Teil (21) und ein zweites Teil (23) aufweist, und wobei der innere Förderkanal (25) durch einen Hohlraum bestimmt ist, der durch die entsprechenden Stirnflächen des einander gegenüberliegenden ersten Teils (21) und zweiten Teils (23) des drehbaren Ventilteils (20) gebildet ist.

8. Ventilvorrichtung nach Anspruch 7, wobei eines von dem ersten Teil (21) und dem zweiten Teil (23) des drehbaren Ventilteils (20) mit einer Antriebseinrichtung (32) verbunden ist, und wobei ein Drehmomentübertrager (33, 43) zwischen dem ersten Teil (21) und dem zweiten Teil (23) des drehbaren Ventilteils (20) vorgesehen ist.

9. Ventilvorrichtung nach Anspruch 1, wobei ein federnd vorgespanntes Arretierungs-Freigabe-Bauteil (47), das mit Nuten (48) zusammenwirkt, zwischen dem ortsfesten Körper (11) und dem drehbaren Ventilteil (20) angeordnet ist, um eine Anzeige über die richtige Betriebsstellung der Ventilvorrichtung bereitzustellen, in der ein entsprechendes zweites Dichtungsteil (28) genau bezüglich des Auslasses (27) in dem drehbaren Ventilteil (20) und eines Auslasses (17) in dem ortsfesten Körper (11) ausgefluchtet ist.

10. Ventilvorrichtung nach Anspruch 1, wobei ein Anschlagbegrenzer (44, 45) zwischen dem ortsfesten Körper (11) und dem drehbaren Ventilteil (20) zwischengefügt ist, um die Drehbewegung zu begrenzen, die das drehbare Ventilteil (20) in Bezug auf den ortsfesten Körper (11) ausführen kann.

## Revendications

1. Dispositif de valve qui peut être interposé de manière opérationnelle entre un dispositif de réglage de débit et au moins une unité de distribution de liquide qui peut être approvisionnée sous le contrôle dudit dispositif de valve, ledit dispositif de valve comprenant :
un corps fixe (11) avec une surface de revêtement intérieure (18) qui a une entrée (13) et au moins une sortie (17) espacée radialement de ladite entrée (13) ;
un élément de valve qui peut tourner (20) ayant une surface de revêtement respective (22) qui peut tourner autour d'un axe commun (10) avec l'entrée (13) pour ouvrir et fermer de manière sélective une connexion de liquide entre ladite entrée (13) et l'une de la au moins une sortie (17) du corps fixe (11) ;
l'un du corps fixe (11) et de l'élément de valve qui peut tourner (20) abrite un premier élément d'étanchéisation (14) dévié de manière étanche contre ladite surface de revêtement (22) de l'autre desdits corps fixe (11) et élément de valve qui peut tourner (20), ladite surface de revêtement (22) étant sensiblement plane et s'étendant latéralement au-delà du premier élément d'étanchéisation (14), ledit élément de valve qui peut tourner (20) ayant un conduit d'adduction interne (25) qui a une entrée (26) sur sa surface co-alignée avec l'entrée (13) dans ledit corps fixe (11) et ledit axe de rotation (10) et qui a une sortie (27) espacée radialement selon la même distance de ladite sortie (26) dudit élément de valve qui peut tourner (20) que celle selon laquelle ladite au moins une sortie (17) dans ledit corps fixe (11) est espacée de ladite entrée respective (13) ;
l'une de ladite au moins une sortie (17) dans ledit corps fixe (11) et de ladite sortie (27) dans ledit élément de valve qui peut tourner (20) contient un deuxième élément d'étanchéisation respectif (28), ledit deuxième élément d'étanchéisation (28) étant fait à partir d'un élastomère et dévié par un ressort (29) contre une surface (18) de l'autre desdits élément de valve qui peut tourner (20) et corps fixe (11) de sorte que, lorsque ledit deuxième élément d'étanchéisation (28) dans l'un du corps fixe (11) et de l'élément de valve qui peut tourner (20) est complètement désaligné par rapport à n'importe laquelle des sorties (17) dans l'autre du corps fixe (11) et de l'élément de valve qui peut tourner (20), ledit deuxième élément d'étanchéisation (28) ferme de manière étanche ledit conduit d'adduction interne (25) à partir de ladite sortie (17) dans ledit corps fixe (11) pour former une valve d'arrêt ; **caractérisé en ce que**
un joint torique extérieur (50) est placé dans une rainure complémentaire (52) dans ladite surface de revêtement (22) autour dudit deuxième élément d'étanchéisation (28) et espacé dudit deuxième élément d'étanchéisation (28) selon une distance suffisante pour empêcher tout écoulement croisé alors que ledit deuxième élément d'étanchéisation (28) traverse n'importe quelle entrée (17).

2. Dispositif de valve selon la revendication 1, dans lequel ledit corps fixe (11) a au moins deux sorties (17) au niveau de sa surface de revêtement intérieure (18), les deux étant espacées de manière égale par rapport à ladite entrée (13) dans ledit corps fixe (11) ; et dans lequel ledit deuxième élément d'étanchéisation respectif (28) est positionné au niveau de la sortie (27) dudit conduit d'adduction interne (25) et dévié par ledit ressort (29) pour être contigu à la surface de revêtement intérieure (18) dudit corps fixe (11).

3. Dispositif de valve selon la revendication 1 ou 2, dans lequel ledit premier élément d'étanchéisation (14) est placé dans ledit corps fixe (11) et est dévié de manière étanche contre ladite surface de revêtement (22) dudit élément de valve qui peut tourner (20) autour de ladite entrée (26)..

4. Dispositif de valve selon la revendication 2 ou 3, dans lequel ledit premier élément d'étanchéisation (14) est fait à partir d'un élastomère et dévié par un ressort (15).

5. Dispositif de valve selon la revendication 2 ou 3, dans lequel ledit premier élément d'étanchéisation est fait à partir d'un élastomère et dévié par sa propre élasticité résiliente.

6. Dispositif de valve selon la revendication 1, dans lequel ledit premier élément d'étanchéisation est un collier fait à partir d'un matériau rigide poussé par un ressort et muni d'une garniture de rétention.

7. Dispositif de valve selon la revendication 1, dans lequel ledit élément de valve qui peut tourner (20) comprend une première partie (21) et une seconde partie (23), et dans lequel ledit conduit d'adduction interne (25) est déterminé par une cavité formée par les surfaces de revêtement respectives de la première partie (21) et la seconde partie (23) juxtaposées de l'élément de valve qui peut tourner (20).

8. Dispositif de valve selon la revendication 7, dans lequel l'une de la première partie (21) et de la seconde partie (23) de l'élément de valve qui peut tourner (20) est reliée à un dispositif d'entraînement (32), et dans lequel un transmetteur de couple (33, 43) est fourni entre la première partie (21) et la seconde partie (23) de l'élément de valve qui peut tourner (20).

9. Dispositif de valve selon la revendication 1, dans lequel un élément de relâchement de détente (47) dévié de manière résiliente, coopérant avec des encoches (48), est agencé entre le corps fixe (11) et l'élément de valve qui peut tourner (20) pour fournir une indication de la position de fonctionnement correcte du dispositif de valve, où un deuxième élément d'étanchéisation respectif (28) est exactement aligné autour de la sortie (27) dans ledit élément de valve qui peut tourner (20) et d'une sortie (17) dans ledit corps fixe (11).

10. Dispositif de valve selon la revendication 1, dans lequel un limiteur d'arrêt (44, 45) est interposé entre le corps fixe (11) et l'élément de valve qui peut tourner (20) pour limiter le mouvement de rotation que l'élément de valve qui peut tourner (20) peut avoir par rapport au corps fixe (11).
